# EUROPEAN PATENT SPECIFICATION

(11) **EP 2 845 487 B1**
(45) Date of publication and mention of the grant of the patent: **02.08.2017**
(21) Application number: 14160424.9
(22) Date of filing: 18.03.2014
(51) Int. Cl.: A22C 17/08, B08B 1/00

(54) **An automatic machine for removal of seasoning lard paste**
Automatische Maschine zur Beseitigung von Schweinefettwürzpaste
Machine automatique pour l'élimination de pâte saindoux d'assaisonnement

(30) Priority: 09.09.2013 IT RE20130063; 09.09.2013 IT RE20130062
(43) Date of publication of application: 11.03.2015
(73) Proprietor: MACCHINE SONCINI ALBERTO S.R.L., 43013 Langhirano (PR) (IT)
(72) Inventor: Soncini, Alberto, 43013 Langhirano, Parma (IT)
(74) Representative: Corradini, Corrado

(56) References cited:
- ES-A1- 2 032 247
- FR-A1- 2 512 642
- FR-A5- 2 193 336
- US-A- 1 670 809
- US-A- 3 478 380
- US-A1- 2009 241 472

## Description

### TECHNICAL FIELD

The present invention relates to an automatic machine for removal of seasoning lard paste from hams, and more in particular an automatic machine for dry removal of seasoning lard paste from seasoned raw hams to be subjected to a following de-boning.

### PRIOR ART

As is known, during the processing cycle of raw cured hams the hams have to be washed at least once, typically following the seasoning and before the de-boning.

The washing has the aim of removing the fat, also known as lard, which can be mixed with salt, pepper and sometimes with fine cereal flours, and used to cover the lean part of the ham exposed to the air (without rind), with the aim of slowing the drying and at the same time giving the surface meat, i.e. the meat in contact with the seasoning lard paste, a degree of drying-out that is homogeneous with the more internal part of the ham.

Though the layer of seasoning paste is therefore very useful for obtaining a ham that is homogeneously seasoned and of greater quality, it must be removed at the end of the seasoning, as it comprises saline parts, fatty parts, and not rarely also bacterial flora.

For automatic washing of the raw hams, traditionally washing machines are used that carry out a water-washing of the ham so as to remove the seasoning lard paste present on the lean part of the ham and thus uncovering this lean part.

A first known type of these automatic washing machines includes the use of a jet of pressurized water, which, as it exerts a mechanical action on the hams, causes the detaching of the paste from it and subsequent removal thereof.

A second known type of these automatic machines includes the use of washing brushes wetted by a jet of water, in which the mechanical detaching action of the paste from the ham is done by brushes and the action of removal and cleaning of the zone uncovered by the ham is performed by the jet of water.

Machines are kown, disclosed in the documents D1: US 3 478 380 and D2: FR 2 512 642, suitable for dry removal of fat from cuts of meat comprising a rest and retaining plane which will come into contact with the rear surface of the cut of meat and a rotating brush. Movement means are provided able to move the rotating brush and the rest plane with respect to one other in such a way as to brush at least a portion of the front surface of the cut of meat.

A drawback encountered in these machines of known type, whether of the first type or the second, lies in the fact that the detached paste removed from the hams is mixed together with the washing water, making suitable filtering treatments and/or purifying treatments necessary before it can be eliminated, which lead to greater costs in the production cycle of the hams.

An aim of the present invention is to obviate the above-mentioned drawbacks in the prior art, with a solution that is simple, rational and relatively inexpensive.

These aims are attained by the characteristics of the invention as recited in the independent claim. The dependent claims delineate preferred and/or especially advantageous aspects of the invention.

### DESCRIPTION OF THE INVENTION

In particular, the invention makes available an automatic machine for dry removal of the seasoning lard paste from hams according to claim 1, which comprises at least a rest and vertical retaining plane able to come into contact with, and to support the rear surface of a ham.

In the invention, the automatic machine comprises at least a rotating brush and movement means able to move at least one of the rest plane and/or the rotating brush in such a way as to brush as least a portion of the front surface of the ham.

With this solution, the seasoning lard paste can be removed by means of an automatic dry process, i.e. without the use of water or any other liquid, by means of mechanical action of only the rotating brush on the ham.

In a further aspect of the invention the movement means comprise first translating means able to actuate a reciprocal translation between the rest plane and the rotating brush along a perpendicular direction to the rest plane. Further, the movement means comprise second translating means able to actuate a reciprocal translation between the rest plane and the rotating brush along a parallel direction to the rest plane.

In this way, the movement of the rotating brush is completely automated and simple to realize and enables brushing the whole area of the front surface of the ham covered by the seasoning lard paste.

Further, in an advantageous aspect of the invention the rest plane can be oscillated with respect to an oscillating axis substantially parallel to the rest plane.

In this way, the area of the front surface of the ham brushed by the rotating brush is increased, also increasing the efficiency of the machine.

In a further aspect of the invention a method is provided for dry removal of the seasoning lard paste from hams according to claim 8, which comprises steps of:
- resting the rear surface of a ham in contact with a vertical rest and retaining plane;
- activating a rotating brush in rotation and
- operating, in reciprocal translation, the rotating brush and the rest plane in such a way that the rotating brush enters into contact with at least a portion of the front surface of the ham provided with at least a layer of seasoning lard paste.

Further, the method can comprise a step of collecting the seasoning lard paste removed from the front surface of the ham and projected by the rotating brush by centrifugal effect into at least a collecting tub.

### BRIEF DESCRIPTION OF THE DRAWINGS

Further characteristics and advantages of the invention will emerge from the following description of a preferred non-limiting embodiment, with the aid of the figures of the annexed drawings.
Figure 1 is a view from above of a machine for removal of seasoning lard paste from hams, not according to the invention.
Figure 2 is a sectional view along a vertical plane of figure 1.
Figure 3 is a view from above of a machine for removal of seasoning lard paste from hams according to the invention.
Figure 4 is a sectional view along a vertical plane of figure 3.
Figure 5 is the section V-V of figure 3.

### BEST WAY OF CARRYING OUT THE INVENTION

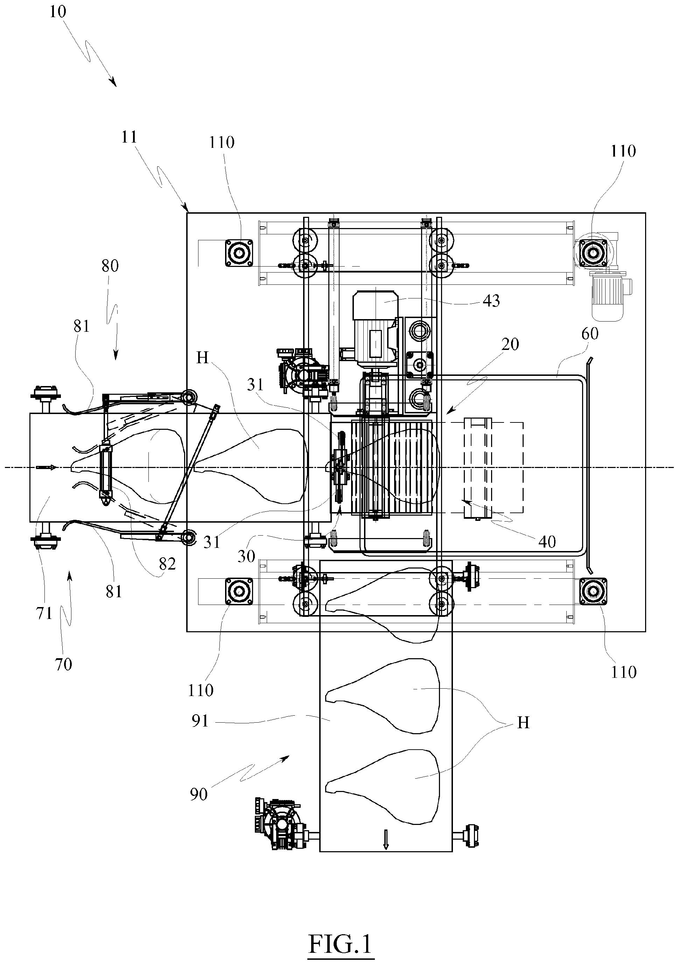

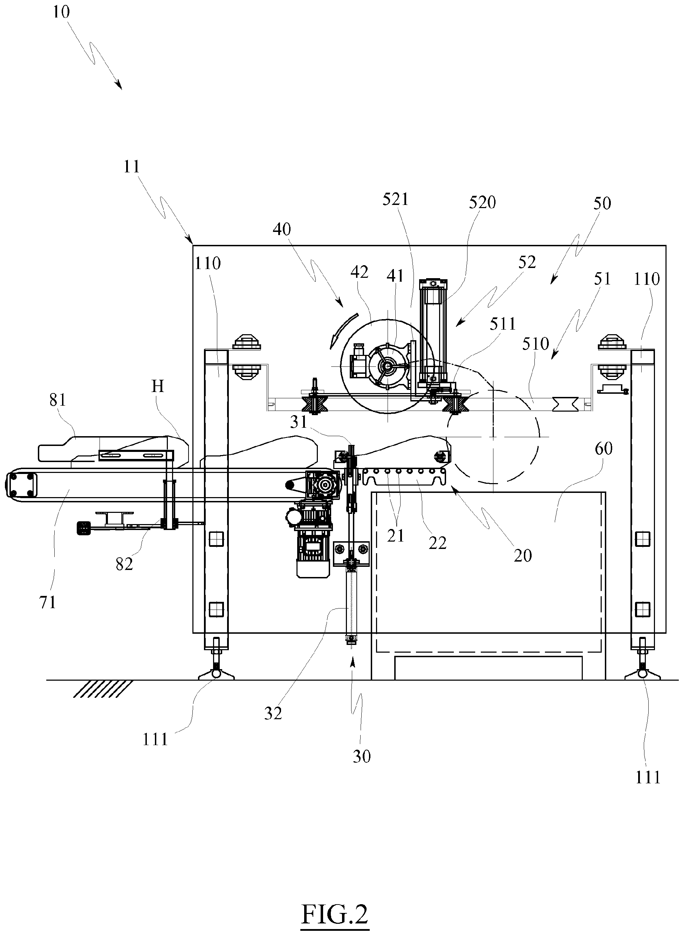

With particular reference to the Fig.1 and Fig.2, reference numeral 10 relates to an example of an automatic machine for the dry removal of seasoning lard paste from raw hams H.

The machine 10 comprises a support frame 11 comprising four vertical uprights 110 provided with respective supports 111 on the ground.

The machine 10 comprises a supporting surface 20, intended to restingly support at least a ham H, which supporting surface 20 is supported by the support frame 11.

The rest plane 20 is arranged substantially horizontal and the ham H is placed in a laid-out position with its rear surface, entirely covered by the rind, in contact with the rest plane 20.

The supporting surface 20 comprises, for example, a roller plane 21, idle rollers of which are rotatably associated to a pair of parallel vertical side walls 22 supported by the support frame 11.

The machine 10 further comprises gripping means 30 of at least a portion of the ham H, which gripping means 30 are placed in proximity of the rest plane 20 and are able to releasably firmly lock the ham H resting on the support plane 20.

The gripping means 30 comprise a pair of jaws 31 activated to open and close by at least a jack 32, which jaws 31 in the closed position are suitable to grip at least a portion of the tapered end of the ham H resting on the support plane 20.

In particular, the jaws 31 are mobile between an open position, in which they do not interfere with the ham in transit on the rest plane 20 being lowered below the supporting surface 20, and a closed position where they are in a closed configuration and raised above the rest plane 20.

The machine 10 in particular comprises a rotating brush 40, which is mobile relative to the rest plane 20 between at least a retracted position and at least a position close thereto.

The rotating brush 40 comprises a substantially cylindrical roller 41 from the outer skirt of which a plurality of radial bristles 42 projects.

In practice, the rotation axis of the roller 41 is substantially parallel to the axis of the rollers of the roller conveyor 21 which defines the rest surface 20, i.e. substantially perpendicular to the longitudinal axis of the ham H resting on the rest surface 20.

The radial bristles 42 are for example made of material suitable for contact with foodstuffs.

The roller 41 is driven in rotation by at least an electric motor 43.

The rotating brush 40 is able to rotate at a rotation speed of substantially between 800 and 2800 revolutions per minute.

The machine 10 comprises movement means 50, which are configured to move the rotating brush 40 with respect to the rest plane 20, so that the bristles 42 of the brush 40 are in contact with a portion of the front surface of the ham H, particularly the entire front surface of the ham H covered with a layer of seasoning lard paste, so as to dry-brush the ham.

The movement means 50 comprise first translating means 51 able to translate the rotating brush 40 along a direction parallel to the rest plane 20, and second translating means 52 able to translate the rotating brush 40 along a perpendicular direction to the rest plane 20, i.e. vertical. In practice, the combination of the translations imposed by the first and second translating means 51 and 52 is suitable for bringing the rotating brush 40 into a trajectory substantially parallel to the front surface of the ham H to be brushed.

The first translating means 51 comprise, in detail, a straight and horizontal guide 510 fixed superiorly to the support frame 10 and a mobile carriage 511 translated along the guide 510 by means of appropriate flexible members 512, for example motorized chains.

The second translating means 52 comprise a mobile support 520, slidably associated to the mobile carriage 511 with respect to a vertical direction and associated to a double-acting linear actuator 521, the stem of which is solidly associated to the mobile support 520 and the body of which is fixed to the mobile carriage 511.

The roller 41 is supported in rotation by means of suitable bearings, by the mobile support 520.

The machine 10 also comprises a collecting tub 60 able to collect the seasoning lard paste that detaches from the front surface of the ham H due to the mechanical action exerted by the rotating brush 40.

In particular, the collecting tub 60 is located below the rest plane 20, so that the rest plane is at least partially superimposed in the plant to a portion of the collecting tub 60.

The collecting tub 60 has plan dimensions larger than the plan dimensions of the rest plane 20 and extends over the rest plane 20 by a substantial portion projecting from the opposite side with respect to the gripping means 30.

In this way, the collecting tub 60 is able to receive the pieces of seasoning lard paste that detach from the ham H and that are projected by centrifugal effect from the rotating brush 20 on the side opposite the tapered end of the ham H.

The machine 10 further comprises loading means 70 for loading the hams H onto the rest plane 20, for example one at a time.

The loading means 70 comprise a motorized conveyor 71, for example a conveyor belt, which is substantially horizontal with the hams H travelling in a laid-out position on the rear surface thereof with the tapered ends thereof arranged posteriorly with respect to the advancing direction imposed by the conveyor 71.

The downstream end of the conveyor 71 (in the advancing direction of the hams H thereon) is located in proximity of the rest plane 20, in practice substantially following on directly therefrom with no gap.

The rollers of the roller plane 21 defining the rest plane 20 are arranged with the rotation axis thereof substantially perpendicular to the longitudinal axis of the conveyor 71.

The gripping means 30 can be substantially interposed between the rest plane 20 and the conveyor 71, so as to grip the tapered end of the ham H as soon as it passes in support from the conveyor 71 to the rest plane 20.

The loading means 70 include alignment means 80 of the hams H on the mobile plane of the conveyor 71.

The alignment means 80 include, for example, a pair of profiled side separating walls 81, actuated by a jack 82, which are mobile between a broadened position and a neared position in which they come into contact with the lateral flanks of the ham H and align the longitudinal axis of the ham with the advancement direction of the conveyor 71.

The alignment means 80 are advantageously arranged near the upstream end of the conveyor 71.

Further, the loading means 70 comprise, for example, at least a pusher element, for example a piston, not shown since of known type, which pushes the ham H from the conveyor 71 to the rest plane 20, so as to facilitate the loading of the ham H on the rest plane 20.

The machine 10 also comprises unloading means 90 for removing the ham H, once cleaned of the seasoning lard paste, from the rest surface 20 and making it available for subsequent processing stations, such as washing and drying and de-boning.

The discharge means 90 comprise, in particular, a further motorised conveyor 91, for example a conveyor belt, substantially horizontal, on which the hams H travel in the laid-out position, lying on the rear surface thereof. The upstream end of the further conveyor 91 (in the advancement direction of the hams H thereon) is located in proximity of the rest plane 20, in practice substantially continuously with it.

The conveyor 91 develops longitudinally in a substantially perpendicular direction to the conveyor 71.

In practice, using this squared arrangement of the conveyors 71, 91, respectively upstream and downstream of the rest plane 20, the seasoned lard paste removed from the hams H, when located on the rest plane 20, never comes into contact with the hams H cleaned located on the further conveyor 91.

The hams H resting on the further conveyor 91 are positioned with its longitudinal axis substantially perpendicular to the longitudinal axis of the further conveyor itself.

The conveyor 71, the rest plane 20 and at least a portion of the collecting tub 60, advantageously, are substantially aligned along the advancement direction of the hams H imposed by conveyor 71.

The rotating brush 40 is able to rotate in a single rotation direction such as to project the paste detached from hams H downwards and onto the opposite side with respect to the conveyor 71, in practice towards the collecting tub 60.

Further, the discharge means 90 comprise at least a further pusher element such as a further piston, not shown because of known type, which pushes the ham H resting on the rest plane 20 on the further conveyor 91, so as to facilitate the unloading of the rest plane 20.

The machine might also include at least a heater element (not illustrated) associated to the support frame 10, for example, a radiant panel or the like, able to heat the seasoning lard paste on the ham H resting on the rest plane 20.

Lastly, the rest plane 20 could be adapted to oscillate with respect to a horizontal oscillating axis, in this case, for example, motor means could be present for oscillating the rest plane 20.

The oscillation axis, for example, might advantageously be the central axis of the rest plane 20 or an offset axis belonging to a median plane substantially passing through the longitudinal axis of the ham H resting on the rest plane (i.e. perpendicular to the axis of the rollers of the roller plane 21).

In light of the above, the operation of the machine 10 is as follows.

The activation of the machine 10 is automated and controlled by a control and command unit programmed to perform the operating steps illustrated below.

The hams H in transit on the loading means 70 are loaded, one at a time, onto the rest plane 20 on which they are stationed for the time necessary for the removal of the seasoning lard paste from the broad portion and advanced on the front surface without rind.

Once a ham H is positioned resting on the rest plane 20, the means for gripping 30 are carried in the closed position and grip a tapered end portion of the ham H substantially blocking the ham on the rest plane 20.

When the ham H is stably blocked the movement means 50 are activated and the rotating brush 40 rotated, so that the bristles 42 of the rotating brush are in contact with the front surface of the ham H to be brushed.

The mechanical action of the rotating brush 40 detaches pieces of seasoning lard paste from the front surface of the ham H, in one or more attempts, exposing the flesh of the ham, and the centrifugal action exerted by the rotation of the rotating brush 40 projecting the detached pieces of seasoning lard paste into the collecting tub 60, where they are collected for later disposal.

Once the entire area affected by the seasoning lard paste of the front surface of the ham H has been brushed, the rotating brush 40 is distanced from the rest plane 20, the gripping means 30 is opened and the cleaned ham H is pushed on the discharge means 90 and made available for subsequent finishing treatments and de-boning.

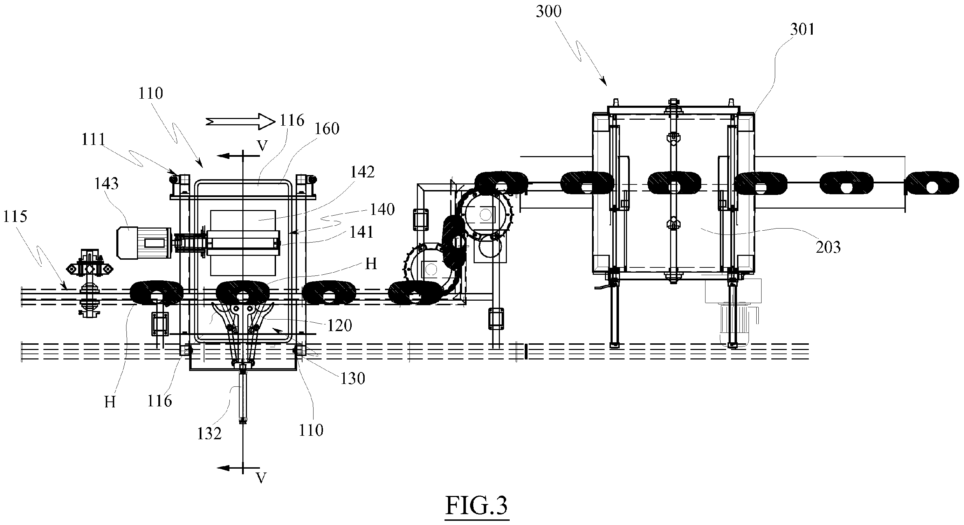

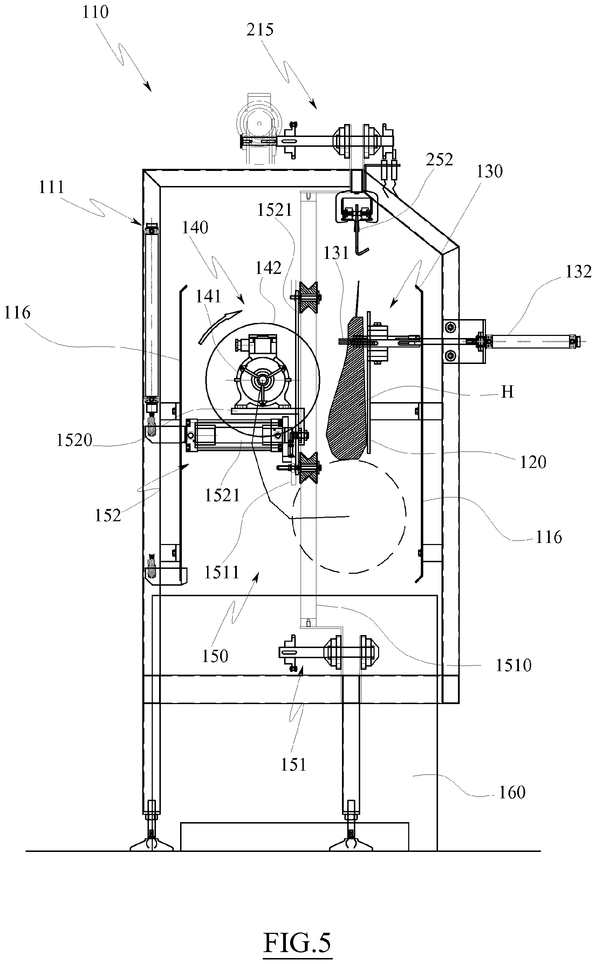

With reference to Fig.3 to Fig.5 a treatment plant of hams, for example raw cured hams, according to the invention comprises an automatic machine 110 for the dry removal of seasoning lard paste from raw hams H, and a washing station 300, placed in series and able to be crossed successively by the hams H.

The machine 110 comprises a support frame, for example of a portal type, which internally defines a tunnel through which the hams H are passed. The tunnel is straight and comprises two end openings, aligned to one another, respectively for inlet and outlet of the hams H.

The hams H are conveyed through the tunnel by a conveyor 215 associated to the top of the machine 110, and comprising a rail 250 for supporting and sliding a chain 251 to links of which a plurality of hooks 252 is associated from which the ham H is hung by means of a usual string 253 fixed to the tapered end of a ham H.

In practice, the conveyor 215 is able to transport the hams H in a suspended configuration, in which the longitudinal axis of the ham H is positioned substantially vertically and the tapered end thereof is positioned superiorly.

In the illustrated embodiment the chain 251 is loop-wound, and is step-translated by action of a gear reducer group with an incorporated shifter. The machine 110 comprises a rest plane 120, destined to restingly support at least a ham H, which is supported by the support frame of the machine.

The rest plane 120 is is positioned vertically or near vertically.

The rest plane 120 is flanked to the advancement line of the hams H on the rear part thereof; in this way the ham H is able to rest against the plane 120 by the rear surface thereof, entirely covered by the rind, when it transits internally of the machine 110 and is halted therein.

The machine 110 further comprises gripping means 130 of at least a portion of the ham H, which gripping means 130 are placed in proximity of the rest plane 120 and are able to releasably firmly lock the ham H resting on the support plane 120.

The gripping means 130 comprise a pair of jaws 131 activated to open and close by at least a jack 132, which jaws 131 in the closed position thereof are able to grip at least a portion of the tapered end of the ham H resting on the support plane 120.

In particular, the jaws 131 are mobile between an open position, in which they do not interfere with the ham resting on the rest plane 120. and a closed position where they are in a closed configuration and retain a portion of the tapered end of the ham H rested on the rest plane 120.

The machine 10 in particular comprises a rotating brush 140, which is mobile relative to the rest plane 120 between a retracted position and a position close thereto.

The rotating brush 140 comprises a substantially cylindrical roller 141 rotatably associated to the support frame 110, from an outer skirt of which projects a plurality of radial bristles 142 attached to the roller 141.

In practice, the rotation axis of the roller 41 is substantially parallel to the axis of the rollers of the roller conveyor which defines the rest surface 120, i.e. substantially perpendicular to the longitudinal axis of the ham H resting on the rest surface 120.

The radial bristles 142 are made of material suitable for contact with foodstuffs.

The roller 141 is driven in rotation by the electric motor 143.

The rotating brush 140 is able to rotate at a rotation speed of substantially between 800 and 2800 revolutions per minute.

The machine 110 comprises movement means 150, which are configured to move the rotating brush 140 with respect to the rest plane 120, so that the bristles 142 of the brush 140 are in contact with a portion of the front surface of the ham H, particularly the entire front surface of the ham H covered with a layer of seasoning lard paste, so as to dry-brush the ham.

The movement means 150 comprise first translating means 251 able to translate the rotating brush 140 along a direction parallel to the rest plane 120, in particular a vertical and parallel direction to the longitudinal axis of the ham H positioned on the rest plane 120.

Further, the movement means 150 comprise second translating means 152 able to translate the rotating brush 140 along a perpendicular direction to the rest plane 120, i.e. horizontal. In practice, the combination of the translations imposed by the first and second translating means 151 and 152 is suitable for bringing the rotating brush 140 into a trajectory substantially parallel to the front surface of the ham H to be brushed.

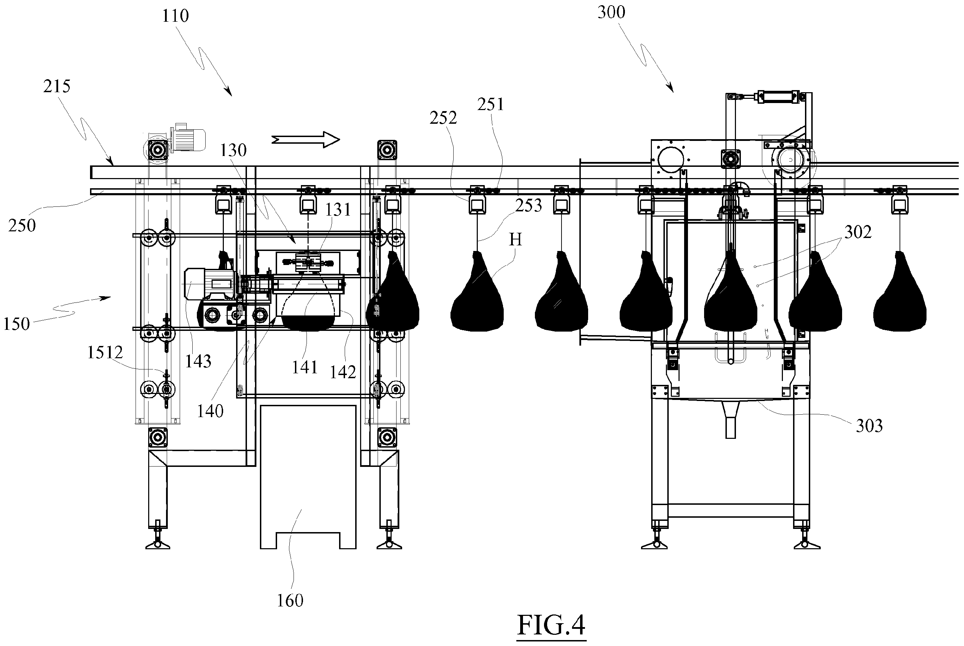

The first translating means 151 comprise, in detail, a straight and vertical guide 1510 fixed superiorly to the support frame 110 and a mobile carriage 1511 translated along the guide 1510 by means of appropriate flexible members 1512, for example motorized chains (Fig.4).

The second translating means 152 comprise a mobile support 1520, slidably associated to the mobile carriage 1511 with respect to a horizontal direction perpendicular to the rest plane 120, which is associated to a double-acting linear actuator 1521, the stem of which is solidly associated to the mobile support 1520 and the body of which is fixed to the mobile carriage 1511. The roller 141 is supported in rotation, for example by means of suitable bearings, by the mobile support 1520.

The machine 110 also comprises a collecting tub 160 able to collect the seasoning lard paste that detaches from the front surface of the ham H due to the mechanical action exerted by the rotating brush 140.

In particular, the collecting tub 160 is located below the rest plane 120 and the rotating brush 140, so that the rest plane and the rotating brush 140 are at least partially superimposed in the plant to a portion of the collecting tub 160.

The collecting tub 160 has plan dimensions larger than the plan dimensions of the rest plane 120 and the rotating brush 140, and it extends by a considerable amount on the opposite side of the rotating brush 140 with respect to the rest plane 120.

In this way, the collecting tub 160 is able to receive the pieces of seasoning lard paste that detach from the ham H and that are projected by centrifugal effect from the rotating brush 140 inferiorly and posteriorly.

The rotating brush 140 is able to rotate in a single rotation direction such as to project the paste detached from hams H downwards and onto the opposite side with respect to the rest plane 120, in practice towards the collecting tub 160.

The machine 110 further comprises spray-protection wall 116 fixed to the support frame 110, for example located frontally and posteriorly of the rotating brush.

Lastly, the rest plane 120 could be made to oscillate with respect to a horizontal oscillating axis.

The machine might also include at least a heater element (not illustrated) associated to the support frame 110, for example, a radiant panel or the like, able to heat the seasoning lard paste on the ham H resting on the rest plane 120.

The plant 1 is generally associated to a washing machine 300 located downstream of the machine 110, which also comprises a portal frame defining a tunnel into which the appended hams pass.

The washing machine 300 comprises a plurality of nozzles 302, fixed or oscillating, able to dispense a washing liquid, for example water, onto the ham crossing the washing machine.

The washing machine 300 further comprises collecting means 303 of the washing liquid located inferiorly of the advancement line of the hams H.

In the light of the above, the operation of the machine 110 is as follows.

The activation of the machine is automated and controlled by a control and command unit programmed to perform the operating steps illustrated below. The hams H transported by the conveyor 215 enter, one at a time, in the machine 110, flanking to the rest plane 120.

The conveyor 215 is halted when a ham is positioned at the rest plane for the time required for removal of the seasoning lard paste from the broad part (lower) of the front surface without rind.

Once a ham H is positioned resting on the rest plane 120, the means for gripping 130 are carried in the closed position and grip a tapered end portion of the ham H substantially blocking the ham on the rest plane 120.

When the ham H is stably blocked the movement means 150 are activated and the rotating brush 140 rotated, so that the bristles 142 of the rotating brush are in contact with the front surface of the ham H to be brushed.

The mechanical action of the rotating brush 140 detaches pieces of seasoning lard paste from the front surface of the ham H, in one or more attempts, exposing the flesh of the ham, and the centrifugal action exerted by the rotation of the rotating brush 40 projecting the detached pieces of seasoning lard paste into the collecting tub 160, where they are collected for later disposal.

Once the entire area affected by the seasoning lard paste of the front surface of the ham H has been brushed, the rotating brush 140 is distanced from the rest plane 120, the gripping means 130 is opened and the conveyor 215 reactivated so that the cleaned ham H can cross the washing machine 100 and made available for subsequent finishing treatments and boning.

The invention is not limited to the embodiment disclosed, and it is susceptible to numerous modifications and improvements, all falling within the scope of protection of the following claims.

## Claims

1. An automatic machine (10, 110) for dry removal of seasoning lard paste from hams (H) which comprises at least a substantially vertical rest and retaining plane (20, 120) suitable to come into contact with the rear surface of a ham (H), and further comprising loading means (70, 250) able to bring at least a ham (H) to the rest plane (20, 120) in a hanging configuration, at least a rotating brush (40, 140) and movement means (50, 150) able to move the rotating brush (40, 140) and/or the rest plane (20, 120) in respect of one another in such a way as to put the brush into contact with at least a portion of the front surface of the ham (H).

2. The machine (10, 110) of claim 1, wherein the movement means (50, 150) comprise first translating means (51, 151) able to actuate a reciprocal translation of the rest plane (20, 120) and of the rotating brush (40, 140) along a direction parallel to the rest plane (20,120).

3. The machine (10, 110) of claim 1, wherein the movement means (50, 150) comprise second translating means (52, 152) able to actuate a reciprocal translation of the rest plane (20, 120) and of the rotating brush (40, 140) along a parallel direction orthogonal to the rest plane (20, 120).

4. The machine (10, 110) of claim 1, **characterized in that** it comprises gripping means (30, 130) of at least a portion of ham (H), which means are located in proximity of the rest plane (20, 120).

5. The machine (10, 110) of claim 1, **characterized in that** it comprises at least a collecting tub (60, 160) of the seasoning paste removed from the ham (H) able to be at least partly placed below the rest plane (20, 120).

6. The machine (10, 110) of claim 1, wherein the loading means (70, 250) comprises conveyor means (251) able to bring at least a ham (H) in front of a rest plane (120).

7. A method for dry removal of seasoning lard paste from hams (H) which comprises steps of:
- to advance step by step each ham in hanging configuration on loading means (70, 250) able to bring at least a ham (H) in front of a vertical rest and retaining plane (20, 120),
- resting the rear surface of a ham (H) in contact with a rest and retaining plane (20,120);
- activating a rotating brush (40, 140) in rotation and
- moving the rotating brush (40, 140) and/or the rest plane (20, 120) in such a way that the rotating brush (40, 140) enters into contact with at least a portion of the front surface of the ham exhibiting at least a layer of seasoning lard paste.

8. The method of claim 7, **characterized in that** it comprises a step of collecting the seasoning lard paste removed from the front surface of the ham (H) and projected by the rotating brush by centrifugal effect into at least a collecting tub (60, 160).

## Patentansprüche

1. Automatische Vorrichtung (10, 110) zum trockenen Entfernen von Gewürz-Schmalzpaste von Schinkenstücken (H), welche wenigstens eine im Wesentlichen vertikale Auflage- und Halteebene (20, 120) umfasst, die dazu geeignet ist, mit der hinteren Fläche eines Schinkenstücks (H) in Kontakt zu kommen, ferner umfassend wenigstens Lademittel (70, 250), die in der Lage sind, wenigstens ein Schinkenstück (H) in hängender Konfiguration zu der Auflageebene (20, 120) zu bringen, wenigstens eine rotierende Bürste (40, 140) und Bewegungsmittel (50, 150), die in der Lage sind, die rotierende Bürste (40, 140) und/oder die Auflageebene (20, 120) in Bezug zueinander zu bewegen, derart, dass die Bürste mit wenigstens einem Abschnitt der Vorderfläche des Schinkenstücks (H) in Kontakt gebracht wird.

2. Vorrichtung (10, 110) nach Anspruch 1, wobei die Bewegungsmittel (50, 150) erste Translationsmittel (51, 151) umfassen, die in der Lage sind, eine gegenseitige Translation der Auflageebene (20, 120) und der rotierenden Bürste (40, 140) in eine Richtung parallel zur Auflageebene (20, 120) in Gang zu bringen.

3. Vorrichtung nach Anspruch 1, wobei die Bewegungsmittel (50, 150) zweite Translationsmittel (52, 152) umfassen, die in der Lage sind, eine gegenseitige Translation der Auflageebene (20, 120) und der rotierenden Bürste (40, 140) in eine Parallelrichtung orthogonal zur Auflageebene (20, 120) in Gang zu bringen.

4. Vorrichtung (10, 110) nach Anspruch 1, **dadurch gekennzeichnet, dass** sie Greifmittel (30, 130) zum Greifen von wenigstens einem Abschnitt des Schinkenstücks (H) umfasst, welche Greifmittel in der Nähe der Auflageebene (20, 120) angeordnet sind.

5. Vorrichtung (10, 110) nach Anspruch 1, **dadurch gekennzeichnet, dass** sie wenigstens eine Auffangwanne (60, 160) für die vom Schinkenstück (H) entfernte Gewürzpaste umfasst, die in der Lage ist, wenigstens teilweise unter der Auflageebene (20, 120) angeordnet zu werden.

6. Vorrichtung (10, 110) nach Anspruch 1, wobei die Lademittel (70, 250) Fördermittel (251) umfassen, die in der Lage sind, wenigstens ein Schinkenstück (H) vor die Auflageebene (120) zu bringen.

7. Verfahren zum Entfernen von Gewürz-Schmalzpaste von Schinkenstücken (H), welches folgende Schritte umfasst:
- Schritt-für-Schritt-Vorschieben eines jeden Schinkenstücks in hängender Konfiguration auf Lademitteln (70, 250), die in der Lage sind, wenigstens ein Schinkenstück (H) vor eine vertikale Auflage- und Halteebene (20, 120) zu bringen,
- Auflegen der hinteren Fläche eines Schinkenstücks (H) in Kontakt mit einer Auflage- und Halteebene (20, 120);
- Indrehungversetzen einer rotierenden Bürste (40, 140) und
- Bewegen der rotierenden Bürste (40, 140) und/oder der Auflageebene (20, 120) derart, dass die rotierende Bürste (40, 140) mit wenigstens einem Abschnitt der vorderen Fläche des wenigstens eine Schicht aus Gewürz-Schmalzpaste aufweisenden Schinkenstücks in Kontakt kommt.

8. Verfahren nach Anspruch 7, **dadurch gekennzeichnet, dass** es einen Schritt zum Auffangen der Gewürz-Schmalzpaste umfasst, die von der vorderen Fläche des Schinkenstücks (H) entfernt und von der rotierenden Bürste durch Zentrifugalwirkung in wenigstens eine Auffangwanne (60, 160) geschleudert wird.

## Revendications

1. Machine automatique (10, 110) pour l'élimination à sec de la pâte de saindoux d'assaisonnement de jambons (H) qui comprend au moins un plan d'appui et de maintien sensiblement vertical (20, 120) adapté pour venir en contact avec la surface arrière d'un jambon (H), et comprenant en outre des moyens de chargement (70, 250) adaptés pour amener au moins un jambon (H) sur le plan d'appui (20, 120) dans une configuration en suspension, au moins une brosse rotative (40, 140) et des moyens d'entraînement (50, 150) adaptés pour mettre en mouvement la brosse rotative (40, 140) et/ou le plan d'appui (20, 120) l'un par rapport à l'autre de manière à amener la brosse en contact avec au moins une portion de la surface avant du jambon (H).

2. Machine (10, 110) selon la revendication 1, dans laquelle les moyens d'entraînement (50, 150) comprennent des premiers moyens de translation (51, 151) adaptés pour exécuter une translation alternative du plan d'appui (20, 120) et de la brosse rotative (40, 140) suivant une direction parallèle au plan d'appui (20,120).

3. Machine (10, 110) selon la revendication 1, dans laquelle les moyens d'entraînement (50, 150) comprennent des deuxièmes moyens de translation (52, 152) adaptés pour exécuter une translation alternative du plan d'appui (20, 120) et de la brosse rotative (40, 140) suivant une direction parallèle orthogonale au plan d'appui (20, 120).

4. Machine (10, 110) selon la revendication 1, **caractérisée en ce qu'**elle comprend des moyens de préhension (30, 130) d'au moins une portion de jambon (H), lesquels moyens sont situés à proximité du plan d'appui (20, 120).

5. Machine (10, 110) selon la revendication 1, **caractérisée en ce qu'**elle comprend au moins un bac de récupération (60, 160) de la pâte d'assaisonnement enlevée du jambon (H) adapté pour être placé au moins partiellement sous le plan d'appui (20, 120).

6. Machine (10, 110) selon la revendication 1, dans laquelle les moyens de chargement (70, 250) comprennent des moyens de transport (251) adaptés pour amener au moins un jambon (H) en face d'un plan d'appui (120).

7. Procédé pour l'élimination à sec de la pâte de saindoux d'assaisonnement de jambons (H) qui comprend les étapes suivantes :
- l'avancement pas à pas de chaque jambon dans une configuration en suspension sur des moyens de chargement (70, 250) adaptés pour amener au moins un jambon (H) en face d'un plan d'appui et de maintien vertical (20, 120),
- l'appui de la surface arrière d'un jambon (H) en contact avec un plan d'appui et de maintien (20, 120) ;
- l'activation d'une brosse rotative (40, 140) en rotation et
- le déplacement de la brosse rotative (40, 140) et/ou du plan d'appui (20, 120) de telle manière que la brosse rotative (40, 140) vienne en contact avec au moins une portion de la surface avant du jambon présentant au moins une couche de pâte de saindoux d'assaisonnement.

8. Procédé selon la revendication 7, **caractérisée en ce qu'**il comprend une étape de collecte de la pâte de saindoux d'assaisonnement enlevée de la surface avant du jambon (H) et projetée par la brosse rotative par effet centrifuge dans au moins un bac de récupération (60, 160).
